# EUROPÄISCHE PATENTANMELDUNG

(11) **EP 4 191 514 A1**
(43) Veröffentlichungstag der Anmeldung: **07.06.2023**
(21) Anmeldenummer: 21211944.0
(22) Anmeldetag: 02.12.2021
(51) Int. Cl.: G06T 5/00, G06V 10/28, G06V 10/34, G06V 10/44, G06V 20/54

(54) **VERFAHREN UND VORRICHTUNG ZUR AUTOMATISIERTEN ERKENNUNG VON VERKEHRSTEILNEHMERTYPEN IM STRASSENVERKEHR**

(71) Anmelder: Roadia GmbH, 13465 Berlin (DE)
(72) Erfinder: Fischer, Tobias, 13465 Berlin (DE); Filipenko, Mykhaylo, 13465 Berlin (DE); Hantschmann, Markus, 13465 Berlin (DE); Hall, Benjamin, 13465 Berlin (DE)
(74) Vertreter: dompatent von Kreisler Selting Werner - Partnerschaft von Patent- und Rechtsanwälten mbB

(57) **Zusammenfassung**

Die Erfindung betrifft ein Verfahren (100) zur automatisierten Erkennung von Verkehrsteilnehmertypen im Straßenverkehr, wobei das Verfahren (100) die folgenden Schritte aufweist:
- Erzeugung von Bilddaten unter Verwendung einer Kameravorrichtung, wobei die Erzeugung der Bilddaten die Erzeugung von gefilterten Bilddaten umfasst, die Filterung der bilddatenhardwarebasiert und/oder softwarebasiert erfolgt und wobei bei der Filterung der Detailgrad des aufgenommenen Bildes reduziert wird (110);
- Speichern der gefilterten Bilddaten in einer Speichereinheit (120);
- Klassifizierung der Bilddaten hinsichtlich des Verkehrsteilnehmertyps unter Verwendung eines mit Trainingsdaten trainierten Klassifikators (130). Das erfindungsgemäße Verfahren (100) erlaubt eine zuverlässige und DSGVOkonforme Erkennung von Verkehrsteilnehmertypen im Straßenverkehr.

## Beschreibung

Die vorliegende Erfindung betrifft ein Verfahren zur automatisierten Erkennung von Verkehrsteilnehmertypen im Straßenverkehr sowie eine entsprechende Vorrichtung.

Eine präzise Erfassung der Verkehrsteilnehmertypen ist für die Planung von Städten und Straßen von essenzieller Bedeutung. Dabei muss in zuverlässiger Weise ermittelt werden, welcher Verkehrsteilnehmertyp (z. B. PKW, LKW, Bus, Motorrad, Fahrrad oder Fußgänger) wie häufig einen bestimmten Straßenabschnitt befährt.

Für die Erfassung der Verkehrsteilnehmertypen können verschiedene Verfahren eingesetzt werden.

Bei der manuellen Zählung können die Daten über die Verkehrsteilnehmertypen durch speziell hierfür eingesetzte Personen relativ zuverlässig erfasst werden. Allerdings ist die manuelle Zählung sehr zeit- und kostenintensiv.

Zudem können Seitenradarmessvorrichtungen, Infrarotmessvorrichtungen und Lidarmessvorrichtungen verwendet werden, um die Verkehrsteilnehmertypen in automatisierter Weise zu erkennen.

Seitenradarmessvorrichtungen und Infrarotmessvorrichtungen können am Straßenrand angeordnet werden und durch Aussendung und Empfang elektromagnetischer Wellen die Anzahl der Achsen sowie den Achsabstand des Fahrzeuges ermitteln. Aus diesen Informationen kann auf den jeweiligen Verkehrsteilnehmertyp geschlossen werden. Allerdings können mit diesen Verfahren keine Fußgänger erkannt werden. Zudem eignet sich der Einsatz von Seitenradar- und Infrarotmessvorrichtungen nur bedingt in Anwendungsszenarien, in denen eine Erfassung der Verkehrsteilnehmertypen über mehrere Fahrspuren (z.B. auf der Autobahn) erfolgen soll.

Ferner können Lidarmessvorrichtungen durch die Aussendung und den Empfang optischer Impulse eine Punktwolke (im Englischen auch als point cloud bezeichnet), d.h. eine 3D-Punktekarte, ihrer Umgebung erstellen. Aus den geometrischen Zusammenhängen der Punktwolke können anschließend die Verkehrsteilnehmertypen ermittelt werden. Allerdings sind Lidarmessvorrichtungen sehr kostintensiv und zudem relativ unzuverlässig bei der Erkennung von Fußgängern und Radfahrern. Zudem kann der Einsatz von Lidarmessvorrichtungen Interferenzen verursachen, insbesondere wenn autonome Fahrzeuge präsent sind, die ebenfalls Lidarmessvorrichtungen verwenden.

Eine Alternative zu den vorstehend genannten Verfahren stellen kamerabasierte Verfahren dar. Durch den Einsatz hochauflösender Kamerasysteme und entsprechender Erkennungsalgorithmen ist es möglich, eine automatisierte und zuverlässige Erkennung der Verkehrsteilnehmertypen zu gewährleisten. Zudem ist eine Erkennung der Verkehrsteilnehmertypen über mehrere Fahrspuren möglich.

Ein Problem bei kamerabasierten Verfahren ist jedoch darin zu sehen, dass bei der Erfassung der Verkehrsteilnehmer häufig auch personenbezogene Daten aufgenommen werden. Beispielsweise wird bei kamerabasierten Verfahren meist das Kennzeichen eines Verkehrsteilnehmers oder das Gesicht eines Fahrers aufgenommen und gespeichert. In vielen Ländern ist jedoch die Aufnahme, Speicherung und Verarbeitung personenbezogener Daten mit strengen Regelungen verbunden. In der EU ist die Aufnahme und Verarbeitung personenbezogener Daten gemäß der DSGVO (Datenschutz-Grundverordnung) nur bei ausdrücklicher Einwilligung der betroffenen Personen erlaubt. Das Einholen einer ausdrücklichen Einwilligung für alle Verkehrsteilnehmer ist jedoch praktisch unmöglich.

Zur Lösung der vorstehend diskutierten Probleme wird mit der vorliegenden Erfindung ein Verfahren zur automatisierten Erkennung von Verkehrsteilnehmertypen im Straßenverkehr vorgeschlagen, wobei das Verfahren die folgenden Schritte aufweist:
- Erzeugung von Bilddaten unter Verwendung einer Kameravorrichtung, wobei die Erzeugung der Bilddaten die Erzeugung von gefilterten Bilddaten umfasst und wobei bei der Filterung der Detailgrad des aufgenommenen Bildes reduziert wird;
- Speichern der gefilterten Bilddaten in einer Speichereinheit;
- Klassifizierung der gefilterten Bilddaten hinsichtlich des Verkehrsteilnehmertyps unter Verwendung eines mit Trainingsdaten trainierten Klassifikators.

Mit der vorliegenden Erfindung wird ein zuverlässiges Verfahren für eine automatisierte Erkennung von Verkehrsteilnehmertypen im Straßenverkehr bereitgestellt, wobei keine personenbezogenen Daten gespeichert werden. Daher erlaubt die vorliegende Erfindung insbesondere eine DSGVO-konforme Erfassung von Verkehrsdaten. Das erfindungsgemäße Verfahren eignet sich zudem für den weltweiten Einsatz, da es eine Anpassung an die landesspezifischen Anforderungen erlaubt.

Die Kameravorrichtung kann insbesondere einen Bildsensor aufweisen, der beispielsweise als CCD-Sensor oder als CMOS-Sensor ausgeführt sein kann. Dabei kann insbesondere ein hochauflösender Bildsensor mit einer Auflösung von mehreren 10 Megapixel vorgesehen sein.

Wie nachfolgend noch im Detail erläutert wird, kann für die Filterung ein hardwarebasierter und/oder ein softwarebasierter Filter zum Einsatz kommen. Durch die Filterung wird der Detailgrad des aufgenommenen Bildes (entweder im gesamten Bild oder bereichsweise) reduziert. Die Erkennbarkeit wird durch die Filterung (zumindest bereichsweise) reduziert. Dadurch werden die personenbezogenen Daten, insbesondere ein Fahrzeugkennzeichen oder das Gesicht eines Verkehrsteilnehmers, unkenntlich gemacht.

Gemäß einigen Ausführungsformen der Erfindung können die gefilterten Bilddaten vollständig gefilterte Bilddaten aufweisen. Anders ausgedrückt kann der gesamte Bildbereich eines Bildes gefiltert sein. Alternativ hierzu kann es vorgesehen sein, dass lediglich ein Bildbereich selektiv gefiltert ist. In letzterem Fall können in einem vorgelagerten Verfahrensschritt sensible Bereiche in einem Bild erkannt und diese Bereiche unkenntlich gemacht werden. In einem vorgelagerten Schritt erfolgt in diesem Fall also zusätzlich eine Erkennung mindestens eines sensiblen Bildbereichs, in dem personenbezogene Daten enthalten sind oder in dem personenbezogene Daten erwartet werden. Anschließend erfolgt die selektive Filterung des erkannten sensiblen Bildbereichs zur Reduzierung des Detailgrads in dem Bildbereich. Für die Erkennung des sensiblen Bildbereichs kann auf bereits aus dem Stand der Technik bekannte Objekterkennungsalgorithmen und Formerkennungsalgorithmen zurückgegriffen werden, welche beispielsweise die Erkennung eines Gesichts oder die Erkennung eines Fahrzeugschildes in einem Bild erlauben.

Die Speicherung der gefilterten Bilddaten kann beispielsweise in einer lokalen Speichereinheit, in einem Cloudspeicher oder in einer zentralen Steuereinheit erfolgen. Die gespeicherten Bilddaten weisen keine personenbezogenen Daten auf, welche die Identifizierung einer Person erlauben.

Bei der Klassifizierung der gefilterten Bilddaten wird erfindungsgemäß ein mit Trainingsdaten trainierter Klassifikator verwendet, der auf den Prinzipien des maschinellen Lernens (im Englischen auch als Machine Learning bezeichnet) beruht. Hierzu kann beispielsweise ein künstliches neuronales Netz (im Englischen auch als artificial neural network oder ANN bezeichnet) verwendet werden. Weitere aus dem Stand der Technik bekannte Verfahren des maschinellen Lernens können ebenfalls zum Einsatz kommen.

Beispielsweise kann der Klassifikator mit einem Trainingsdatensatz trainiert werden, der einen Satz Bilddaten sowie den einzelnen Bilddaten zugeordnete Klassifizierungsdaten aufweist. In den Klassifizierungsdaten können Informationen darüber enthalten sein, welcher Verkehrsteilnehmertyp (z.B. PKW, Motorrad oder Fahrrad) in der jeweiligen Bilddatei zu erkennen ist. Der Trainingsdatensatz kann beispielsweise manuell erstellt worden sein, d.h. durch eine Person, welche mit der Auswertung der einzelnen Bilddaten beauftragt wurde. Der Trainingsdatensatz kann dabei mehrere Hundert oder mehrere Tausend einzelne Bilddaten aufweisen. Der Trainingsdatensatz kann dabei insbesondere gefilterte Bilddaten aufweisen, die dieselbe Filterung durchlaufen haben, die auch bei der Filterung der neu aufgenommenen Bilddaten zum Einsatz kommt.

Gemäß einer Ausführungsform der Erfindung kann es vorgesehen sein, dass die Filterung eine softwarebasierte Filterung umfasst. Eine softwarebasierte Filterung bietet den Vorteil, dass die Filterparameter an die jeweils vorliegenden Anforderungen angepasst werden können. Beispielsweise können die Filterparameter in Abhängigkeit des Landes, in dem das Verfahren implementiert wird, angepasst werden, um den Anforderungen des entsprechenden Landes gerecht zu werden.

Auch kann vorgesehen sein, dass die Filterung eine Reduzierung der Bildauflösung für mindestens einen Bereich des Bildes beinhaltet. Dadurch kann entweder in dem gesamten Bild oder selektiv in einem spezifischen Bereich die Erkennbarkeit reduziert werden. In letzterem Fall können in einem vorgeschalteten Verfahrensschritt sensible Bildbereiche, in denen beispielsweise ein Kennzeichen oder ein Gesicht abgebildet ist, detektiert werden. Der Vorteil der Reduzierung der Bildauflösung im gesamten Bildbereich ist darin zu sehen, dass in diesem Fall keine zusätzliche Detektion sensibler Bildbereiche erforderlich ist. Dadurch kann das Verfahren besonders effizient gestaltet werden. Hingegen ist der Vorteil der selektiven Filterung darin zu sehen, dass die Bildqualität in den weniger sensiblen Bereichen weiterhin hoch bleibt. Dies kann dazu beitragen, dass die Erkennungsrate bei der automatisierten Erkennung von Verkehrsteilnehmertypen unter Verwendung des Klassifikators erhöht wird.

Des Weiteren kann vorgesehen sein, dass bei der Filterung ein Weichzeichen-Filter zur Reduzierung der Bildschärfe verwendet wird. Dadurch kann ebenfalls die Erkennbarkeit im gesamten Bild oder einem ausgewählten Bildbereich reduziert werden. Dabei können verschiede Weichzeichen-Filter, die aus dem Stand der Technik bekannt sind, zum Einsatz kommen. Beispielsweise kann ein Gauß-Filter (im Englischen auch als Gaussian blur filter bezeichnet) oder weitere Glättungsverfahren verwendet werden.

Gemäß einer Ausführungsform des erfindungsgemäßen Verfahrens kann vorgesehen sein, dass bei der Filterung die Farbtiefe der aufgenommenen Bilddaten reduziert wird. Beispielsweise kann die Farbtiefe um mindestens 50 % reduziert werden, um insbesondere die Erkennbarkeit eines Gesichtes in einem Bild zu erschweren. Dabei kann z.B. eine ursprüngliche Farbtiefe von 16 Bit auf 8 Bit oder 4 Bit reduziert werden. Auch kann beispielsweise ein Farbbild mit einer Farbtiefe von 16 Bit in ein Graustufenbild mit einer Farbtiefe von 8 Bit (oder weniger) umgewandelt werden. Wie bei den vorstehend beschriebenen Filtereffekten, kann die Reduzierung der Farbtiefe auf das gesamte Bild oder alternativ selektiv auf einen Bildbereich angewendet werden.

Ferner kann vorgesehen sein, dass bei der Filterung eine softwarebasierte, adaptive Filterung verwendet wird, wobei bei dem Verfahren bevorzugt auch die Position der Kameravorrichtung unter Verwendung eines Ortungssensors erkannt wird und die adaptive Filterung eine Reduzierung des Detailgrades in Abhängigkeit von der detektierten Position der Kameravorrichtung vornimmt. Die softwarebasierte und adaptive Filterung erlaubt eine optimale Verarbeitung der Bilddaten in Abhängigkeit von dem spezifischen Anwendungsszenario. Beispielsweise kann mittels eines Ortungssensors die aktuelle Position der Kameravorrichtung erkannt werden, sodass in einem Land, in dem strenge Datenschutzregelungen vorgegeben sind, eine besonders starke Filterung bzw. eine besonders starke Reduzierung des Detailgrades eingestellt wird, während in einem anderen Land, in dem keine strengen Datenschutzregelungen vorgegeben sind, eine schwache Filterung verwendet wird oder sogar keine Filterung zum Einsatz kommt und die Bilddaten ungefiltert gespeichert werden. Anders ausgedrückt erfolgt bei dem beschriebenen Ausführungsbeispiel eine konditionale Filterung, die sich beispielsweise an die Region, in der das Verfahren implementiert wird, anpasst.

Gemäß einer Ausführungsform des erfindungsgemäßen Verfahrens kann vorgesehen sein, dass die Filterung eine hardwarebasierte Filterung umfasst. Der Einsatz einer hardwarebasierten Filterung hat den Vorteil, dass der Rechenaufwand beim erfindungsgemäßen Verfahren signifikant reduziert werden kann. Alternativ kann ein hardwarebasierter Filter in Kombination mit einem softwarebasierten Filter verwendet werden. Dabei kann der hardwarebasierte Filter beispielsweise dazu eingesetzt werden, eine Reduzierung des Detailgrads zu erzielen, während in einem nachgelagerten Schritt ein softwarebasierter Filter eingesetzt wird, um die Eigenschaften der Bilddaten für die anschließende Klassifizierung zu verbessern. Beispielsweise kann bei der nachgelagerten softwarebasierten Filterung eine Erhöhung der Bildschärfe vorgenommen werden (im Englischen auch als edge enhancement bezeichnet), damit beispielsweise die Kontur der abgebildeten Fahrzeuge deutlicher zu erkennen ist. Auf diese Weise können die Vorteile der verschiedenen Filter miteinander kombiniert werden, sodass der hardwarebasierte Filter die Erkennbarkeit zunächst reduziert, damit keine personenbezogenen Daten aufgenommen werden, während der softwarebasierte Filter die Erkennbarkeit des zu erkennenden Objektes verbessert.

Auch kann vorgesehen sein, dass die Filterung eine Filterung unter Verwendung eines geschichteten Acrylglases, eines aufgerauten Acrylglases, einer Noppenfolie und/oder einer Diffusionsfolie umfasst. Die vorstehend bezeichneten Elemente können allesamt als hardwarebasierte Filter dienen. Die hardwarebasierten Filter basieren insbesondere auf dem Prinzip, dass einfallendes Licht an unregelmäßigen Schichten diffus gestreut wird. Dadurch wird bewusst eine Unschärfe erzeugt, wodurch die personenbezogenen Daten aus einem aufzunehmenden Bild herausgefiltert werden. Die vorstehend genannten Filter sind kostengünstig verfügbar und einfach zu implementieren. Insbesondere können die Filter als aufklebbare Folien und Platten ausgebildet sein.

Ferner kann vorgesehen sein, dass bei der Filterung eine hardwarebasierte, adaptive Filterung verwendet wird, wobei bevorzugt eine Irisblende mit variabler Öffnung und besonders bevorzugt eine elektrisch ansteuerbare Irisblende verwendet wird. Durch die Einstellung einer Irisblende kann die Beleuchtungszeit gemäß den jeweiligen Anforderungen eingestellt werden. Beispielsweise kann vorgesehen sein, dass die Öffnung der Irisblende elektrisch angesteuert werden kann, und zwar in Abhängigkeit von Positionsdaten, welche durch einen Ortungssensor bereitgestellt werden und die aktuelle Position der Kameravorrichtung beschreiben. So kann beispielsweise in einer Region, in der strenge Datenschutzregelungen vorgesehen sind, eine größere Öffnung der Irisblende eingestellt werden als einer Region, in der weniger strenge Datenschutzregelungen gelten. Das Einstellen einer größeren Öffnung trägt zu einer erhöhten Unschärfe des aufgenommenen Bildes bei, während eine kleinere Öffnung der Irisblende zu einem schärferen führt. Durch die Kombination der elektrisch steuerbaren Irisblende und dem Ortungssensor kann also die Schärfe der aufgenommenen Bilder in automatisierter Weise in Abhängigkeit von der Region, in der das erfindungsgemäße Verfahren eingesetzt wird, eingestellt werden.

Gemäß einer weiteren Ausführungsform der Erfindung kann ferner vorgesehen sein, dass die Öffnung der elektrisch steuerbaren Irisblende in Abhängigkeit von der erkannten Person in automatisierter Weise eingestellt wird. Hierzu kann in einem vorgelagerten Schritt der Verkehrsteilnehmertyp bestimmt werden. Hierzu kann der vorstehend beschriebene Klassifikator verwendet werden. Beispielsweise kann es vorgesehen sein, dass im Falle der Erkennung von Fußgängern eine größere Öffnung eingestellt wird als im Falle der Erkennung eines LKW. Auf diese Weise kann in automatisierter Weise bei ausgewählten Verkehrsteilnehmern eine höhere Unschärfe eingestellt werden, um die personenbezogenen Daten stärker zu unterdrücken. Anschließend werden ausschließlich die gefilterten Bilddaten gespeichert, sodass keine Speicherung der personenbezogenen Daten erfolgt.

Darüber hinaus kann gemäß der vorliegenden Erfindung vorgesehen sein, dass die Filterung eine Filterung unter Verwendung eines Polarisationsfilters umfasst. Polarisationsfilter werden häufig in der Photographie verwendet, um störende Reflexionen auf reflektierenden Oberflächen (beispielsweise Wasser-, Glas- oder Kunststoffoberflächen) zu vermeiden. Hingegen kann gemäß der vorliegenden Erfindung ein Polarisationsfilter eingesetzt werden, um bewusst das an Oberflächen reflektierte Licht aufzunehmen und dadurch Personen, die sich beispielsweise hinter einer Windschutzscheibe oder einem Gebäudefenster befinden, unkenntlich zu machen. Der Polarisationsfilter kann zuvor in einem vorgelagerten Kalibrierschritt derart kalibriert werden, dass das an Oberflächen reflektierte Licht maximiert wird.

Gemäß einer bevorzugten Ausführungsform der vorliegenden Erfindung kann vorgesehen sein, dass die Filterung einen ersten Filterschritt und einen zweiten Filterschritt umfasst, wobei im ersten Filterschritt eine hardwarebasierte Filterung und im zweiten Filterschritt eine softwarebasierte Filterung erfolgt oder wobei im ersten Filterschritt und im zweiten Filterschritt jeweils eine softwarebasierte Filterung erfolgt. Dabei kann im ersten Filterschritt nach einem oder mehreren der oben ausgeführten Prinzipien ein reduzierter Detailgrad der Bilddaten erzielt werden. Anders ausgedrückt werden im ersten Filterschritt etwaige in einem aufgenommenen Bild vorhandene personenbezogene Daten unkenntlich gemacht. Dies kann insbesondere durch die bewusste Einführung einer Unschärfe erfolgen. Der erste Filterschritt kann hardwarebasiert oder softwarebasiert erfolgen. In dem zweiten Filterschritt, der softwarebasiert erfolgt, werden die Bilddaten für die anschließende Klassifizierung optimiert. Insbesondere kann dabei die Detail- und Konturschärfe erhöht werden. Auf diese Weise werden einerseits die personenbezogenen Daten herausgefiltert und andererseits die Qualität der Bilddaten für die anschließende Prozessierung verbessert. In den in der Speichereinheit gespeicherten gefilterten Bilddaten sind keine personenbezogenen Daten enthalten, die eine Identifizierung der jeweiligen Person erlauben würden.

Ferner wird zur Lösung der vorstehend beschriebenen Aufgabe eine Vorrichtung zur automatisierten Erkennung von Verkehrsteilnehmertypen im Straßenverkehr vorgeschlagen, wobei die Vorrichtung Folgendes aufweist:
- eine Kameravorrichtung umfassend einen Bildsensor und eine Aufnahmeoptik, wobei die Kameravorrichtung dazu ausgelegt ist, Bilddaten aufzunehmen;
- eine Speichereinheit zum Speichern gefilterter Bilddaten, wobei die gefilterten Bilddaten einen reduzierten Detailgrad aufweisen;
- eine Prozessoreinheit, wobei die Prozessoreinheit dazu ausgelegt ist, die gefilterten Bilddaten unter Verwendung eines mit Trainingsdaten trainierten Klassifikators hinsichtlich des Verkehrsteilnehmertyps zu klassifizieren.

Die Erzeugung der gefilterten Bilddaten kann softwarebasiert oder hardwarebasiert erfolgen. Bei der softwarebasierten Implementierung kann die Prozessoreinheit zusätzlich dazu ausgelegt sein, eine softwarebasierte Filterung der aufgenommenen Bilddaten vorzunehmen, wobei insbesondere eine softwarebasierte Filterung gemäß den vorstehend beschriebenen Ausführungsformen verwendet werden kann.

Bei der erfindungsgemäßen Vorrichtung kann bevorzugt vorgesehen sein, dass die Vorrichtung ein geschichtetes Acrylglas, ein aufgerautes Acrylglas, eine Noppenfolie und/oder eine Diffusionsfolie aufweist, die vor dem Bildsensor und im Wesentlichen parallel zu dem Bildsensor angeordnet ist. Durch die vorstehend genannten hardwarebasierten Filter kann der Detailgrad des aufgenommenen Bildes im Vergleich zu einer Aufnahme ohne die genannten Filter reduziert werden.

Gemäß einer weiteren Ausführungsform der Erfindung kann es vorgesehen sein, dass eine Aufnahmeoptik verwendet wird, welche defokussiert vor dem Bildsensor angeordnet ist. Auf diese Weise wird das aufgenommene Bild unscharf abgebildet und es wird eine bewusst durch die Defokussierung verursachte Unschärfe eingesetzt, um den Detailgrad der aufgenommenen Bilddaten zu reduzieren und dadurch keine personenbezogenen Daten aufzunehmen. Ferner kann die Aufnahmeoptik elektrisch steuerbar sein, wobei der Abstand zwischen der Aufnahmeoptik und dem Bildsensor in Abhängigkeit von der aktuellen Region eingestellt werden kann. Dadurch kann in automatisierter Weise in einer Region, in der die Datenschutzregelungen besonders streng sind, der Detailgrad der aufgenommenen Bilddaten signifikant reduziert werden.

Darüber hinaus kann bei der erfindungsgemäßen Vorrichtung vorgesehen sein, dass die Vorrichtung eine Irisblende mit variabler Öffnung aufweist, welche vor dem Bildsensor angeordnet ist, wobei die Irisblende bevorzugt elektrisch ansteuerbar ist. Die Irisblende kann dabei durch eine separate Steuereinheit angesteuert werden. Alternativ kann vorgesehen sein, dass die Prozessoreinheit auch dazu ausgelegt ist, die Irisblende anzusteuern.

Ferner kann vorgesehen sein, dass die Vorrichtung einen Ortungssensor aufweist, wobei der Ortungssensor bevorzugt als GPS-Sensor ausgebildet ist. Der Ortungssensor kann Positionsdaten bereitstellen, durch welche die Vorrichtung erkennen kann, in welcher Region diese gerade eingesetzt wird. In Abhängigkeit von der erkannten Region (beispielsweise Land, Kontinent oder Staatengemeinschaft) können die Filterparameter eingestellt werden, sodass sich die erfindungsgemäße Vorrichtung in automatisierter Weise an die Anforderungen der jeweiligen Region anpassen kann und der Benutzer oder der Installateur der Vorrichtung keine aufwendigen Einstellungen vornehmen braucht.

Nachfolgend wird die Erfindung anhand der Figuren näher erläutert. Dabei zeigen die Figuren Folgendes:
- Fig. 1: ein Ausführungsbeispiel des erfindungsgemäßen Verfahrens,
- Fig. 2: einen Trainingsdatensatz für das Trainieren des Klassifikators,
- Fig. 3: Verfahrensschritte zur Erzeugung von Bilddaten gemäß einem Ausführungsbeispiel des erfindungsgemäßen Verfahrens,
- Fig. 4: ein Ausführungsbeispiel der erfindungsgemäßen Vorrichtung, und
- Fig. 5: ein Ausführungsbeispiel eines adaptiven hardwarebasierten Filters gemäß der erfindungsgemäßen Vorrichtung.

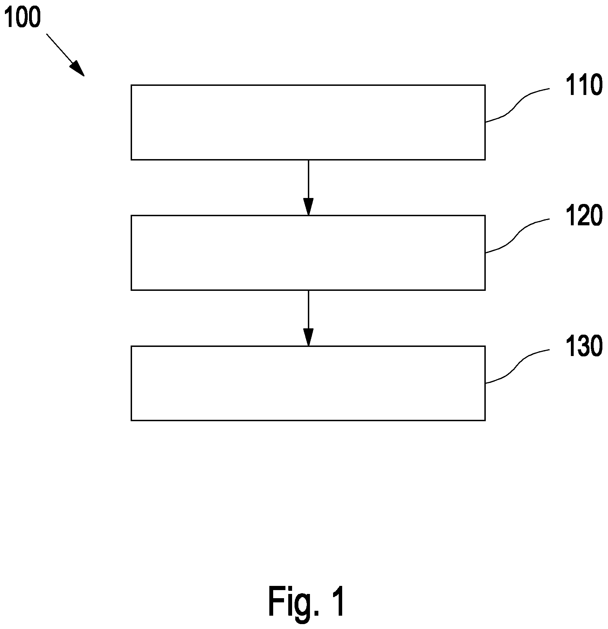

In der Fig. 1 ist eine erstes Ausführungsbeispiel der erfindungsgemäßen Verfahrens 100 dargestellt. Bei diesem Ausführungsbeispiel wird in einem ersten Verfahrensschritt 110 eine Bilddatei unter Verwendung einer Kameravorrichtung erzeugt. Bei der Erzeugung der Bilddatei wird eine gefilterte Bilddatei erzeugt, wobei durch die Filterung der Detailgrad des aufgenommenen Bildes reduziert wird. Dabei kann die Filterung durch den Einsatz einer softwarebasierten Filterung oder einer hardwarebasierten Filterung erfolgen. Durch die Filterung wird die Erkennbarkeit der Details in dem aufgenommen Bild im Vergleich zu einer Aufnahme ohne Filterung reduziert. Dadurch werden etwaige personenbezogene Details im Bild (beispielsweise ein Fahrzeug-Kennzeichen oder das Gesicht eines Verkehrsteilnehmers) unkenntlich gemacht, sodass die gefilterte Bilddatei keinen Rückschluss auf die jeweilige Person zulässt. In einem zweiten Verfahrensschritt 120 wird die erzeugte Bilddatei in einer Speichereinheit hinterlegt. Bei der Speichereinheit kann es sich beispielsweise um eine in der Kameravorrichtung angeordnete Speichereinheit handeln oder aber auch um einen Cloud-Speicher, auf den weitere Vorrichtungen in einem Netzwerk zugreifen können. Die gefilterten Bilddaten werden anschließend in einem dritten Verfahrensschritt 130 unter Verwendung eines mit Trainingsdaten trainierten Klassifikators hinsichtlich des Verkehrsteilnehmertyps klassifiziert. Als Klassifikator kann beispielsweise ein künstliches neuronales Netz verwendet werden. Andere Klassifikatoren, die auf den Prinzipien des maschinellen Lernens bzw. der künstlichen Intelligenz beruhen, können ebenfalls eingesetzt werden. Durch den Einsatz des Klassifikators kann eine schnelle Erkennung der Verkehrsteilnehmertypen sowie eine hohe Erkennungsgenauigkeit gewährleistet werden, ohne dabei personenbezogene Daten speichern zu müssen.

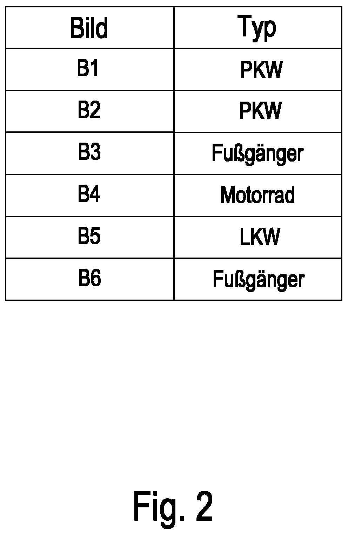

In der Fig. 2 ist beispielhaft das Prinzip eines Trainingsdatensatzes dargestellt, welcher für das Trainieren des Klassifikators verwendet werden kann. Der Trainingsdatensatz kann dabei mehrere Bilddaten (B1 bis B6) aufweisen sowie Klassifizierungsdaten, die Informationen zu dem in der jeweiligen Bilddatei abgebildeten Verkehrsteilnehmertyp (PWK, LKW, Motorrad, Fußgänger, etc.) enthalten. Der Trainingsdatensatz kann beispielsweise manuell erstellt worden sein, indem eine mit der Klassifizierung beauftragte Person die einzelnen Bilddaten auswertet, eine manuelle Klassifizierung der Bilddaten vornimmt und den Bilddaten entsprechende Klassifizierungsdaten zuweist. Der Trainingsdatensatz kann dabei mehrere Tausend oder mehrere Millionen Bilddateien mit entsprechenden Klassifizierungsdaten aufweisen. Je größer der Trainingsdatensatz ist, desto höher ist die zu erwartende Genauigkeit der Klassifikation unter Verwendung des trainierten Klassifikators.

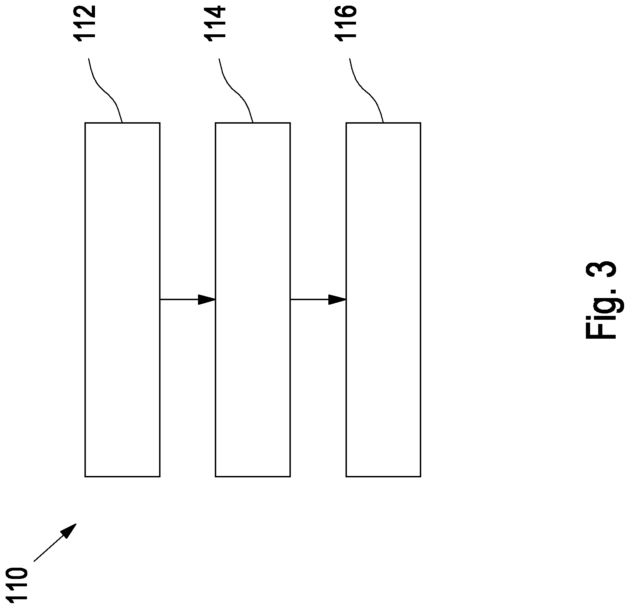

In der Fig. 3 ist der erste Verfahrensschritt 110 zur Erzeugung von Bilddaten gemäß einem Ausführungsbeispiel dargestellt. Bei diesem Ausführungsbeispiel wird zunächst eine ungefilterte Bilddatei unter Verwendung einer Kameravorrichtung erzeugt (Schritt 112). Anschließend wird ein erster Filterschritt zur Reduzierung des Detailgrades durchgeführt (Schritt 114). Der erste Filterschritt kann dabei softwarebasiert erfolgen. Bei dem ersten Filterschritt kann etwa ein Weichzeichen-Filter zum Einsatz kommen, um den Detailgrad des aufgenommen Bildes zu reduzieren. In einem zweiten Filterschritt kann die gefilterte Bilddatei für die anschließende Klassifizierung optimiert werden (Schritt 116). Dabei kann beispielsweise eine Filterung zur Verbesserung der Kantenqualität zum Einsatz kommen ("edge enhancement"). Dadurch werden personenbezogene Daten herausgefiltert, während die Bildqualität dennoch eine hohe Qualität aufweist, wodurch hohe Erkennungsraten bei der automatisierten Klassifizierung gewährleistet werden.

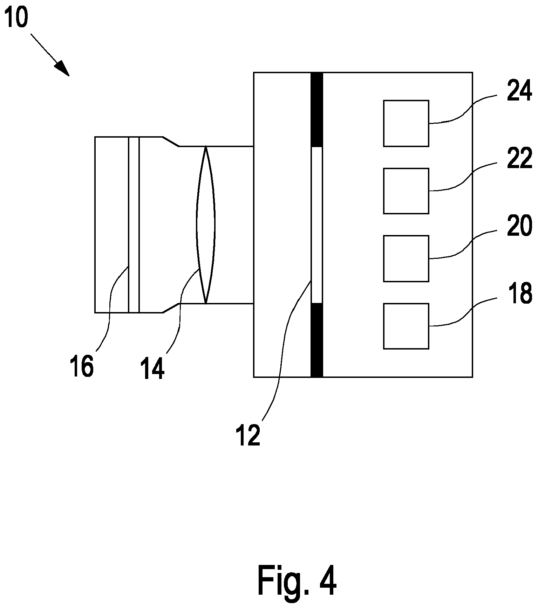

In der Fig. 4 ist ein Ausführungsbeispiel der erfindungsgemäßen Vorrichtung 10 dargestellt. Die Vorrichtung 10 weist einen Bildsensor 12 sowie eine Aufnahmeoptik 14 auf, die vor dem Bildsensor 12 angeordnet ist. Vor der Aufnahmeoptik 14 ist ein optischer Filter 16 angeordnet, der dazu dient, den Detailgrad des aufgenommenen Bildes zu reduzieren. Der optische Filter 16 kann insbesondere als ein geschichtetes Acrylglas, ein aufgerautes Acrylglas, eine Noppenfolie und/oder eine Diffusionsfolie ausgebildet sein. Alternativ kann der optische Filter auch eine Irisblende oder einen Polarisationsfilter aufweisen. Zudem weist die Vorrichtung 10 eine Speichereinheit 18 zum Speichern der gefilterten Bilddaten, eine Prozessoreinheit 20 für die Klassifizierung der gefilterten Bilddaten, einen Ortungssensor 22 zur Erkennung der Position der Vorrichtung 10 sowie ein Kommunikationsmodul 24 auf, die allesamt in einem gemeinsamen Gehäuse angeordnet sind. Das Kommunikationsmodul 24 kann insbesondere als ein drahtloses Kommunikationsmodul 24 ausgebildet und dazu ausgelegt sein, Daten mit weiteren Komponenten in einem Netzwerk auszutauschen. Insbesondere kann das Kommunikationsmodul 24 als WLAN- oder Bluetooth-Modul ausgebildet sein. Die Prozessoreinheit 20 kann zusätzlich dazu ausgebildet sein, etwaige notwendige Verfahrensschritte für eine software-basierte Filterung durchzuführen.

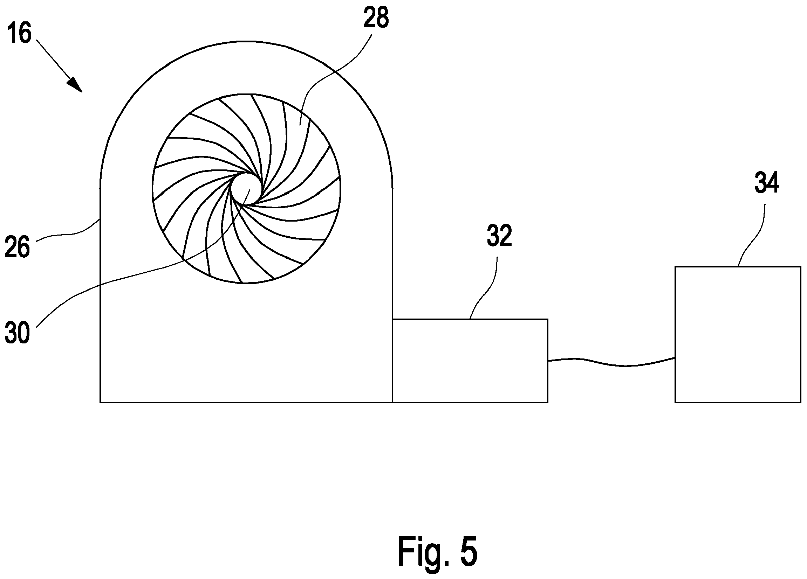

Schließlich ist in der Fig. 5 ein Ausführungsbeispiel eines adaptiven und hardwarebasierten optischen Filters 16 gemäß der erfindungsgemäßen Vorrichtung 10 abgebildet. Bei dem in der Fig. 5 gezeigten Ausführungsbeispiel ist der optische Filter 16 als Irisblende 26 ausgebildet. Die Irisblende 26 weist mehrere Lamellen 28 auf, die gemeinsam geöffnet und geschlossen werden können. Die Lamellen 28 bilden gemeinsam ein zentrale Öffnung 30. Die Lamellen 28 können durch einen Elektromotor 32 angetrieben werden, der über eine dazugehörige Steuereinheit 34 ansteuerbar ist. Durch die elektrisch ansteuerbare Irisblende 26 können die in dem jeweiligen Anwendungsszenario optimalen Filterparameter eingestellt werden. Insbesondere kann die Öffnung der Irisblende 26 in automatisierter Weise regionsabhängig eingestellt werden.

### BEZUGSZEICHENLISTE

- 10: Vorrichtung
- 12: Bildsensor
- 14: Aufnahmeoptik
- 16: optischer Filter
- 18: Speichereinheit
- 20: Prozessoreinheit
- 22: Ortungssensor
- 24: Kommunikationsmodul
- 26: Irisblende
- 28: Lamellen
- 30: Öffnung
- 32: Elektromotor
- 34: Steuereinheit
- 100: erfindungsgemäßes Verfahren
- 110: erster Verfahrensschritt
- 112: Erzeugung einer ungefilterten Bilddatei
- 114: erster Filterschritt zur Reduzierung des Detailgrads
- 116: zweiter Filterschritt zur Verbesserung der Bildqualität
- 120: zweiter Verfahrensschritt
- 130: dritter Verfahrensschritt

## Patentansprüche

1. Verfahren (100) zur automatisierten Erkennung von Verkehrsteilnehmertypen im Straßenverkehr, wobei das Verfahren (100) die folgenden Schritte aufweist:
- Erzeugung von Bilddaten unter Verwendung einer Kameravorrichtung, wobei die Erzeugung der Bilddaten die Erzeugung von gefilterten Bilddaten umfasst und wobei bei der Filterung der Detailgrad des aufgenommenen Bildes reduziert wird (110);
- Speichern der gefilterten Bilddaten in einer Speichereinheit (120);
- Klassifizierung der Bilddaten hinsichtlich des Verkehrsteilnehmertyps unter Verwendung eines mit Trainingsdaten trainierten Klassifikators (130).

2. Verfahren (100) nach Anspruch 1, **dadurch gekennzeichnet, dass** die Filterung eine softwarebasierte Filterung umfasst.

3. Verfahren (100) nach Anspruch 1 oder 2, **dadurch gekennzeichnet, dass** die Filterung eine Reduzierung der Bildauflösung für mindestens einen Bereich eines Bildes beinhaltet.

4. Verfahren (100) nach einem der vorherigen Ansprüche, **dadurch gekennzeichnet, dass** bei der Filterung ein Weichzeichen-Filter zur Reduzierung der Bildschärfe verwendet wird.

5. Verfahren (100) nach einem der vorherigen Ansprüche, **dadurch gekennzeichnet, dass** bei der Filterung die Farbtiefe der aufgenommenen Bilddaten reduziert wird.

6. Verfahren (100) nach einem der vorherigen Ansprüche, **dadurch gekennzeichnet, dass** bei der Filterung eine softwarebasierte, adaptive Filterung verwendet wird, wobei bei dem Verfahren (100) bevorzugt auch die Position der Kameravorrichtung unter Verwendung eines Ortungssensors (22) erkannt wird und die adaptive Filterung eine Reduzierung des Detailgrades in Abhängigkeit von der detektierten Position der Kameravorrichtung vornimmt.

7. Verfahren (100) nach einem der vorherigen Ansprüche, **dadurch gekennzeichnet, dass** die Filterung eine hardwarebasierte Filterung umfasst.

8. Verfahren (100) nach einem der vorherigen Ansprüche, **dadurch gekennzeichnet, dass** die Filterung eine Filterung unter Verwendung eines geschichteten Acrylglases, eines aufgerauten Acrylglases, einer Noppenfolie und/oder einer Diffusionsfolie umfasst.

9. Verfahren (100) nach einem der vorherigen Ansprüche, **dadurch gekennzeichnet, dass** bei der Filterung eine hardwarebasierte, adaptive Filterung verwendet wird, wobei bevorzugt eine Irisblende (26) mit variabler Öffnung (30) verwendet wird und besonders bevorzugt eine elektrisch ansteuerbare Irisblende (26) verwendet wird.

10. Verfahren (100) nach einem der vorherigen Ansprüche, **dadurch gekennzeichnet, dass** die Filterung eine Filterung unter Verwendung eines Polarisationsfilters umfasst.

11. Verfahren (100) nach einem der vorherigen Ansprüche, **dadurch gekennzeichnet, dass** die Filterung eine ersten Filterschritt (114) und einen zweiten Filterschritt (116) umfasst, wobei im ersten Filterschritt (114) eine hardwarebasierte Filterung und im zweiten Filterschritt (116) eine softwarebasierte Filterung erfolgt oder wobei im ersten Filterschritt (114) und im zweiten Filterschritt (116) jeweils eine softwarebasierte Filterung erfolgt.

12. Vorrichtung (10) zur automatisierten Erkennung von Verkehrsteilnehmertypen im Straßenverkehr, wobei die Vorrichtung (10) Folgendes aufweist:
- eine Kameravorrichtung umfassend einen Bildsensor (12) und eine Aufnahmeoptik (14), wobei die Kameravorrichtung dazu ausgelegt ist, Bilddaten aufzunehmen;
- eine Speichereinheit (18) zum Speichern gefilterter Bilddaten, wobei die gefilterten Bilddaten einen reduzierten Detailgrad aufweisen;
- eine Prozessoreinheit (20), wobei die Prozessoreinheit (20) dazu ausgelegt ist, die gefilterten Bilddaten unter Verwendung eines mit Trainingsdaten trainierten Klassifikators hinsichtlich des Verkehrsteilnehmertyps zu klassifizieren.

13. Vorrichtung (10) nach Anspruch 12, **dadurch gekennzeichnet, dass** die Vorrichtung (10) ein geschichtetes Acrylglas, ein aufgerautes Acrylglas, eine Noppenfolie und/oder eine Diffusionsfolie aufweist, wobei die vorstehend genannte Komponente im Wesentlichen parallel zu dem Bildsensor (12) angeordnet ist.

14. Vorrichtung (10) nach einem der Ansprüche 12 oder 13, **dadurch gekennzeichnet, dass** die Vorrichtung (10) eine Irisblende (26) mit variabler Öffnung (30) aufweist, welche vor dem Bildsensor angeordnet ist, wobei die Irisblende (26) bevorzugt elektrisch ansteuerbar ist.

15. Vorrichtung (10) nach einem der Ansprüche 12 bis 14, **dadurch gekennzeichnet, dass** die Vorrichtung (10) einen Ortungssensor (22) aufweist, wobei der Ortungssensor (22) bevorzugt als GPS-Sensor ausgebildet ist.
